(19) Europäisches Patentamt
European Patent Office
Office européen des brevets

(11) **EP 0 932 454 B1**

(12) ## EUROPEAN PATENT SPECIFICATION

(45) Date of publication and mention
of the grant of the patent:
**12.12.2001 Bulletin 2001/50**

(21) Application number: **97909424.0**

(22) Date of filing: **15.10.1997**

(51) Int Cl.⁷: **B07B 1/28**, B07B 1/42,
B07B 1/46, B01D 33/03

(86) International application number:
**PCT/GB97/02839**

(87) International publication number:
**WO 98/16328 (23.04.1998 Gazette 1998/16)**

(54) **IMPROVED VIBRATORY SCREENING MACHINE**

VERBESSERTE VIBRATIONSSIEBMASCHINE

MACHINE DE CRIBLAGE A VIBRATIONS AMELIOREE

(84) Designated Contracting States:
**DE DK FR IT NL**

(30) Priority: **15.10.1996 GB 9621463**
**05.11.1996 GB 9623017**

(43) Date of publication of application:
**04.08.1999 Bulletin 1999/31**

(73) Proprietor: **RIG TECHNOLOGY LIMITED**
**Aberdeen AB1 2LP (GB)**

(72) Inventors:
• **BAILEY, Arthur, Robert**
**West Midlands B75 6SJ (GB)**
• **BURNETT, George, Alexander**
**Aberdeen AB1 7JR (GB)**

(74) Representative: **Nash, Keith Wilfrid et al**
**KEITH W. NASH & Co.**
**Pearl Assurance House**
**90-92 Regent Street**
**Cambridge CB2 1DP (GB)**

(56) References cited:
WO-A-96/08301          FR-E- 59 077
GB-A- 2 034 437        GB-A- 2 123 520
GB-A- 2 206 502        GB-A- 2 266 475
US-A- 3 796 299        US-A- 4 212 731
US-A- 4 340 469        US-A- 4 826 017
US-A- 4 882 054

**Description**

Field of the invention

This invention relates to vibratory screening machines such as shale shakers used to separate mixtures of solids and liquids into the separate components such as mixtures which result from drilling of a bore hole or tunnel when a drilling fluid is used. Separation of the components permits re-use of the drilling fluid.

Background to the invention

There are many examples of such machines which essentially comprise a rigid supporting framework within which is resiliently mounted a box or basket containing one or more mesh screens onto which the mixture of solids and liquids is poured. To assist in the sieving action it is known to vibrate the box or basket so that the solid matter on the mesh screens is itself caused to vibrate. This causes clumps of fine material to break up, and if appropriate, pass through the mesh, together with the liquids, and for larger pieces of material which cannot pass through a mesh to migrate over the surface of the mesh to form part of the solids output of the machine.

By using a coarse mesh screen followed by a fine mesh screen so the process of screening is split into two steps in which liquid and fines (small solid particles) pass through the coarse mesh leaving the larger solid material thereon, and essentially the liquid alone is able to pass through the very fine mesh screen leaving the fines to be discharged from the second screen.

US Patent 4,167,478 describes a modular screening machine having at least one screen for separating particulate material according to size in which the screen box is driven so as to describe an elliptical movement at one end and a substantially rectilinear oscillatory movement at the other end.

US Patent 4,340,469 also describes a vibrating screening apparatus containing two screens which are vertically spaced above and below two independently rotatable shafts containing unbalanced weights so that when rotated the screen assembly is caused to move in a generally elliptical path. By choosing the position of the two shaft axes relative to the centre of gravity of the assembly, a rocking movement is introduced at the infeed end of the assembly.

US Patent 5,265,730 describes a further arrangement in which rotary eccentric vibrators are mounted outboard of the machine but act on the screen basket in such a way as to introduce an appropriate shaking movement.

In such machines the objective is twofold. On the one hand the material has to be vibrated so as to separate liquid from solids as far as possible, and to separate small solids from larger solids particularly where a degree of adhesion can exist as a result of the inherent characteristics of the materials concerned. On the other hand as soon as the liquid and solid separation has occurred, it is desirable to remove the solid material from the screens as quickly as possible to make way for further material which is usually desirably delivered for processing on a continuous basis.

Generally movement of solid material off the screen is achieved by incorporating into the motion a backwards and forwards component, as is known in the field of conveyors. This will cause particulate material to migrate along the length of a conveyor in response to an appropriate shaking movement. A drive for such a conveyor is described in US Patent 4,212,731 which also utilises two counter-rotating eccentric weights to generate the forces necessary to introduce conveyance of particulate material along the surface of the conveyor illustrated therein.

Whereas the rapid removal of solid material from the screen is obviously advantageous where a high throughput is required, if the rate of removal is too high the migrating solids and fines may carry too much of the liquid phase.

Whilst it has been found that improved efficiency, both in terms of screening and throughput, can be achieved using two screens, a first having a relatively coarse mesh and a second having a relatively fine mesh as aforesaid, the actual movement of each of the two screens in order to achieve optimum processing is not necessarily the same for each screen.

It has been proposed to drive the two screens separately so as to achieve optimal movement of each screen. Such an arrangement however introduces additional complexities and cost and whilst it does allow for optimisation of a screening process, is not always desirable.

The present invention seeks to provide a simple and expedient solution by providing an improved vibratory drive and filter basket constructions for a sieve particularly a shale shaker as aforesaid, to obtain a high consistency in the ratio of solids transported therethrough.

The invention provides an improved form of such a machine which is more suitable for real time control using closed loop feedback systems for optimising filtering and throughput.

The invention also provides an improved shale shaker which can be used as a basic unit or in conjunction with other similar units to provide for greater throughput, and to permit a reliable and controllable screening of mixtures of solids and liquids, with or without real time closed loop feedback control.

Summary of the invention

According to one aspect of the present invention, there is provided a vibratory screening machine having a rigid housing within which is resiliently mounted a rigid screening basket having upper and lower screens mounted therein and drive means for vibrating the basket relative to the housing which comprises a pair of counter-rotating masses mounted for rotation about two spaced apart parallel axes between the sides of the housing, characterised in that:

(1) the axes of the counter-rotating masses both occupy a plane which is substantially parallel to the plane of the upper screen and spaced thereabove,
(2) the lower screen forms a continuous ramp which is uniformly sloped upwardly from input end to discharge end and makes an acute angle with the upper screen, and
(3) the rotational moment produced by one of the counter-rotating masses is different from that produced by the other, thereby to produce an elliptical motion of the basket relative to the housing.

Preferably each mass comprises a pair of similar weights which are mounted on opposite sides of a drive unit therefor and the drive and weights are located on a bridge which spans the basket.

The position of the assembly of weights in the drives relative to the basket may be selected to advantage so that the angle of the major axis of the elliptical motion, which tends to act through the centre of gravity of the basket, subtends an acute angle in an upward sense relative to the lower inclined screen.

As employed herein the term "screen" is intended to mean a single framed member having a woven wire mesh filtering panel tensioned thereacross or an assembly of such framed members, arranged in edge abutting relation to form a larger area for filtering more material.

It is important to remove as much liquid as possible from the particulates during passage through the machine. Different sized particles tend to require different treatment to achieve this. The inclined lower screen reduces the velocity of the smaller particles so as to increase their dwell time on the screen and resultant dewatering.

By angling the lower screen relative to the upper screen, it has been found that the vibration will not only cause the appropriate rates of movement of the different particulate materials over each of the two screens, so that neither becomes overloaded in use and a multiphase mixture of larger solids, fines and liquid delivered to the upper screen will be separated in a uniform and reliable manner by the two screens, but in particular the time taken by particulate material to travel a given distance along is substantially consistent.

The inclination of the lower screen also provides a hydrostatic head of liquid over the screening surface, which has been found to improve the efficiency of separation and volumetric throughput.

The inclined screen also guarantees that its surface remains flooded with liquid at all times during operation, which is important to ensure efficient separation and transport.

Whilst it has been proposed in earlier designs of machine to provide upper and lower screens, part of the lower screen being parallel to the upper screen and the remaining part thereof extending upwardly as a ramp so as to converge towards the upper screen and create a weir, it has been found in particular that the abrupt change in direction between the two parts of the lower screen has inhibited regular and uniform migration of particulate material from one end of the lower screen to the other. The material handling characteristics of a machine embodying the invention are found to be better than this earlier design of machine, since the lower screen presents a flat inclined plane to the fines which are to migrate thereover.

The lower screen is preferably adapted to be self-clearing so as to reduce the risk of fines becoming permanently lodged between the interstices of the smaller mesh used on the lower screen. To this end the lower screen is preferably one which includes two screen cloths one laid above the other over a rigid frame, and which are pretensioned during manufacture so that the tension in the lower cloth is greater than the tension in the upper cloth. Any component of motion perpendicular to the plane of the two cloths forming the lower screen will tend to cause the less tensioned cloth to rise and fall relative to the lower cloth, and the relative movement, and particularly the impact between the cloths during such vibration, will tend to dislodge particulate material from the cloth and prevent particulate material from lodging and blinding the screen.

The Centre of Action of a pair of counter-rotating masses will normally lie on a straight line joining the centres of rotation. A straight line resultant will be obtained if the two masses are equal in weight and eccentricity and are contrarotated, as disclosed for example. in GB-A-2123520.

The dynamic forces acting on the system will cause the rotation of the two masses to synchronise.

If the centre of gravity and Centre of Action coincide, the Centre of Action will then describe a generally linear motion substantially perpendicular to the plane containing the two parallel axes of rotation.

Where the centre of gravity of the basket and the Centre of Action of the two counter-rotating masses do not coincide the resultant force will act along a line joining the Centre of Gravity to the Centre of Action.

Where the counter-rotating masses produce a straight line resultant force, this will tend to act along a line between the Centre of Action of the two counter rotating masses and the centre of gravity of the basket.

The amplitude of the basket movement from its mean position will be limited inter alia by the stiffness of the basket mounting to the frame. The basket is preferably mounted on four helical springs which support the weight of the basket and are adapted to vibrate substantially freely with small amplitudes of up to a few millimeters relative to the rigid housing.

Since, in accordance with the invention, the rotational moment produced by one of the counter-rotating masses is different from that produced by the other, (either by using a heavier or lighter mass or a different radius of eccentricity, or a combination of both), two effects are noted.

Firstly the position of the Centre of Action will shift from the midpoint between the two centres of rotation nearer to the axis about which the greater rotational moment is produced. The greater disparity of rotational moment, the greater the shift from the mid-position, as described in US 4,212,731.

Secondly it has been observed that the locus of the Centre of Action will now tend to describe an ellipse and the greater the disparity, the larger will be the minor axis of the ellipse.

Since the forces produced by two contra-rotating masses will combine additively when the masses are moving in the same direction, and will combine subtractively when the masses are moving in opposite directions, the major axis of the ellipse will be generally perpendicular to the plane containing the two axes of rotation and the minor axis of the ellipse will be generally parallel to that plane if the centre of gravity of the basket coincides with the Centre of Action.

However if the basket can vibrate <u>and</u> its centre of gravity does <u>not</u> so coincide, then since the resulting force will always act through the centre of gravity of the basket, it will tend to describe an elliptical path with the major axis of the ellipse orientated so as to lie along the line joining the "operational" centre of gravity of the basket to the Centre of Action of the two counter rotating weights.

It will be seen therefore that by varying the rotational moment of one of the counter rotating masses of the drive unit so that it is different from the other, so the pure straight line movement which results if the two rotary moments are equal is converted into an elliptical motion in which the minor axis of the ellipse and therefore the extent by which the motion is no longer straight-line is determined by the disparity between the two rotary moments, as is also the angle of the major axis of the ellipse.

In a preferred example, the basket dead-weight unladen is in the range 1000-1750Kg, a typical dynamic loading of slurry is in the range 450-700Kg and a first eccentric weight has a mass of 43Kg and the centre of gravity of the mass is some 40mm from the shaft centre line, whilst the second eccentric weight has a mass of 26Kg and its centre of gravity is some 47mm from its shaft centre line, and the rotational speed is such as to produce vibration in the range 20-40Hz, preferably in the range 25-33Hz.

Preferably opposite sides of the rigid housing are parallel and upright when the machine is mounted for use, and nothing protrudes laterally of the frame rigid housing. Thus the machines can be placed side by side in close proximity to allow outgoing solids and liquids to be collected by troughs/conveyors adjacent the output ends of the side-by-side machines, and the slurry input to the machines can be discharged into one or two or more of the machines, depending on the volume of slurry to be handled and the capability of the machines to handle the input material.

Although reference has been made to the rotation of single eccentric weights about each of the two spaced-apart axes of rotation, it is to be understood that each mass or weight along each axis can be divided into two or more (preferably similar) weights, each eccentrically mounted about the same axis.

The invention also extends to a vibratory screening machine comprising a basket having an inclined screen, drive means for vibrating the basket to cause solid material deposited on the screen to migrate therealong up the incline to the upper discharge end of the screen from which the solid material is discharged, wherein the drive means exerts on the basket a resultant force along a line which passes through or near the centre of gravity of the basket when the latter is unloaded, and wherein the inclination of the screen is such that the centre of gravity of the basket continues to lie on or near the said line for different loadings of the basket.

Other features of the invention are defined in the appended claims.

Brief description of the drawings

The invention will now be described by way of example, with reference to the accompanying drawings in which:

> Figure 1 is a side elevation of the vibratory basket of a shale shaker embodying the invention;

> Figure 2 is a cross-section through the elevation of Figure 1;

> Figure 3 is a top view of the basket shown in Figure 1;

> Figure 4 is an end elevation which also shows the having within which the basket is mounted;

> Figure 5 is a sectional elevation through a vibratory drive assembly (of which there are two in the embodiments shown in Figures 1 to 4);

> Figure 6 is a side view, corresponding to Figure 1, of the basket, showing the centre of gravity of the basket when unloaded and the mean centre of gravity of the basket when under normal operating load (an average 70% of maximum load);

> Figure 7 corresponds to Figure 6, and shows the centres of gravity when the basket is loaded, to half capacity, with high or low specific gravity fluids; and

Figure 8 is a view corresponding to Figure 7, and showing the centres of gravity when the basket is fully loaded with a high or low specific gravity fluid.

Detailed description

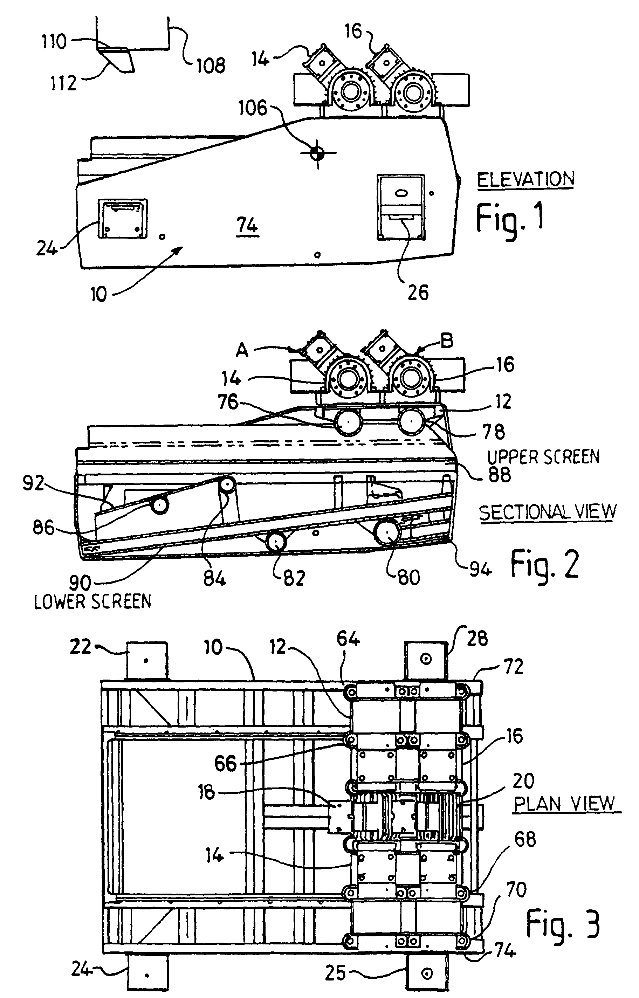

Referring to Figures 1 to 3 a vibratory basket designated 10 is spanned by a bridge 12 (see Figure 3) on which are carried two rotational drives 14 and 16.

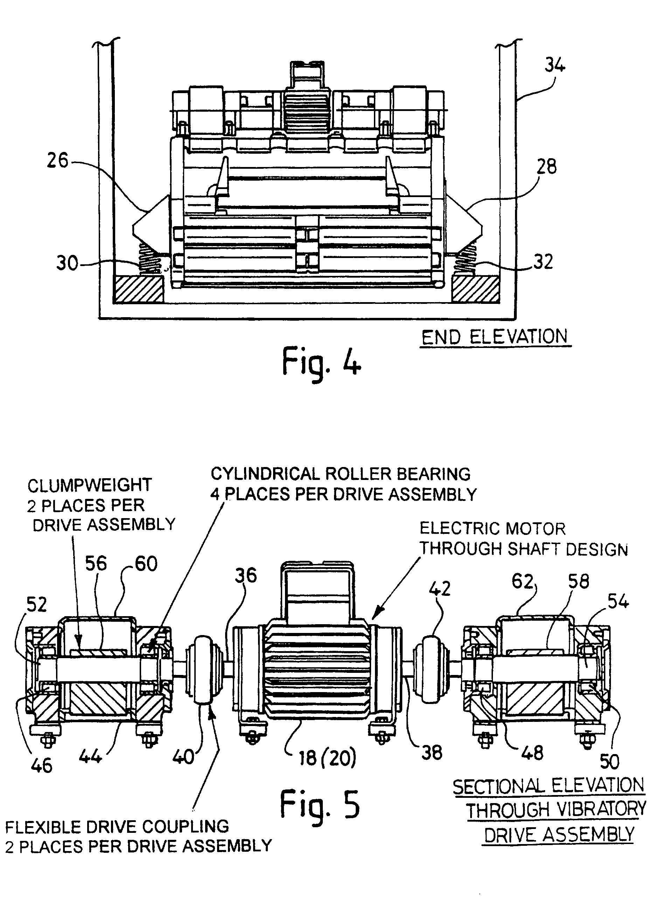

Each of the drives comprises a central electric motor 18, (20) of so-called through-shaft design, having an output shaft protruding axially therefrom on opposite sides of the motor casing, and two equal eccentric "in phase" clump weights, are mounted on each rotating output shaft, so that rotation of the motor and the clump weights produces a rotating force equivalent to the clump weights and their eccentricity. The drives are shown in more detail in Figure 5 and will be described more fully with reference thereto.

The basket 10 is supported on helical springs below four brackets 22, 24, 26, 28. Two of the springs can be seen in Figure 4 and are designated by reference numerals 30 and 32. Figure 4 also shows the housing 34 within which the basket is carried on the springs and it will be seen that the two sides of the housing 34 are uncluttered and have no protruding elements, so that two or more such housings can be abutted laterally against one another frame, side by side. This allows for variations in material feed rate to be more accommodated, by conveying slurry to one, or two or more units (if more than two units are mounted side by side), depending on the volume of slurry to be processed, by means of a transversely extending duct over the input ends of the units.

Figure 5 shows in more detail one of the drive units 16, based on the motor 18. The motor is a through shaft motor and an output shaft extends therefrom on both sides of the motor housing at 36 and 38 respectively. Each output shaft is connected to a flexible drive coupling 40, 42 respectively, the output shafts of which are carried in journal bearings 44, 46 (in the case of coupling 40) and 48, 50 (in the case of coupling 42). Each journal bearing typically comprises a cylindrical roller bearing. Mounted on the coupling output shaft 52, 54 are eccentric clump weights 56, 58 respectively. Rotation of the motor 18 causes both clump weights to be similarly rotated and their eccentricity generates a rotating out of balance force as they rotate.

For safety, and protection against erosion, the clump weights and flexible drives are contained within cylindrical housings 60, 62 respectively. The inboard ends of the housing 60, 62 are coupled to the casing of the motor 18 and are closed at their outboard ends.

The housings 60, 62 each have feet (64, 66, 68, 70 in the case of housing 60) by which the housings are secured to the bridge 12.

The basket 10 is formed from two side panels 72, 74 between which extend hollow cylindrical tubes 76, 78, 80, 82, 84 and 86. These are welded to the two opposed side panels 72, 74 and create a lightweight, very strong rigid structure.

Screen supporting rails (not identified in the drawings) support an upper generally horizontal screen 88 and an inclined lower screen 90, which rises in the direction in which particulate material migrates over its surface during vibration, ie from left to right in Figure 2.

A deflector plate or intermediate screen 92 extends over the lower inclined screen below the region onto which slurry (drilling mud) is poured.

A collector 94 is located below the discharge end 96 of the lower conveyor.

By mounting both the two clump weights and their motor drives just above the upper screen, so the centre of gravity (shown in Figure 1) is considerably lower than if the left hand drive 16 is mounted above the position shown in Figure 2, so that the line joining the axes of the two motors is parallel to the inclined lower screen and which is where it has normally been considered that it should be mounted.

In use the clump weights of drive 14 are rotated in the opposite sense to the clump weights of drive 16.

It has been found in practice that different conveyance characteristics can be produced by different rotations, and in the example shown, if the rotation of the left hand drive 14 in Figure 1 is clockwise, and the rotation of the right hand drive 16 is counter-clockwise, this produces a more consistent and steadier migration of particulates along the screens than if the directions of rotation are reversed.

The motors 18 and 20 may be electric motors, but in combinations where flammable gases or liquid are involved, the motors are more preferably hydraulic or pneumatically powered.

The springs such as 30, 32 may be replaced by blocks of rubber or plastics, or rubber and plastics composite material.

The screens for filtering fluids from solids may be formed from rigid metal, or plastics, or metal reinforced plastic frames having stretched and tensioned and bonded thereto woven wire cloths. Typically each screen has two layers of wirecloth affixed thereto, and the lower cloth has a coarser mesh and higher mesh tension than the upper cloth. Typically the upper cloth has a mesh size in the range 10-80 mesh while the lower cloth has a mesh size in the range 50-350 mesh.

Although not shown, each of the screens 88 and 90 (as identified in Figure 2) may be formed from two or four similar screens arranged in edge abutting relation and sealed against the ingress of liquid around or between their frames. An inflatable seal may be provided to secure and seal the frame in place against rails (not shown) on the underside thereof.

The centre of gravity of the basket 10 in Figure 1 is shown at 106 in Figure 1, and the instantaneous resultant force produced by the combination of the two rotating pairs of clump weights acts through that point.

Where two or more units such as shown in Figures 1 to 4 are mounted side by side, with the side walls of their housings 34 in abutting relation, the feed to the units may comprise a manifold 108 which extends horizontally over the left hand ends (as viewed in Figure 1) of all of the baskets (10), with flow control means 110 selectively allowing or preventing slurry (eg drilling mud) to flow via ducts 112 onto the left hand (input) end of the upper screen 88 (see Figure 2) of some or all of the shakers, as required.

A sump (not shown) below the units collects the filtered liquid material containing fines (which cannot be separated), while solids filtered therefrom and left on the upper and lower screens migrate from left to right to exit off the right hand end of the lower screen, in particular, for collection on a conveyor or in another sump (not shown) mounted along the front of the units.

A control unit (not shown) for sensing the volume flow of material to the units and opening and shutting ducts such as 112 and causing the units to operate as required, may be provided, linked to flow sensors and to controls for opening and closing the ducts and turning the shakers on and off.

A unit as shown in Figures 1 to 5 of the drawings is of particular use in separating solid particulate material from drilling muds recovered from down-hole oil and gas well drilling operations.

Filtering screens for a unit as aforesaid may be of the type produced by United Wire Ltd of Edinburgh, Scotland, UK.

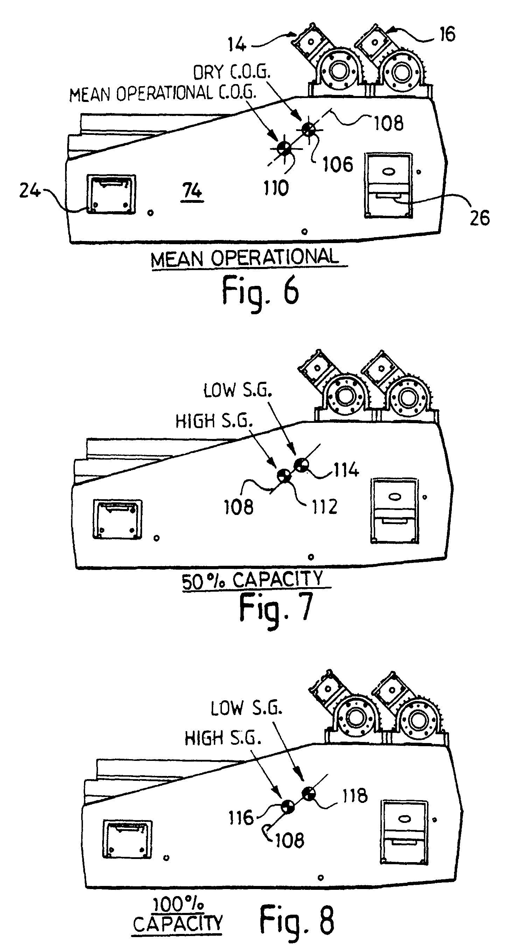

With reference to Figure 6, the position 106 is that of the centre of gravity of the basket 10 when no fluids and cuttings are being carried by the screens of the machine. This position lies on a line 108 which, if extrapolated, will pass through the Centre of Action of the weights.

The Centre of Action lies on a line (not shown) joining the two axes of rotation of the weights. The machine is so configured that the net force exerted by the weights gives rise to no turning moments being exerted on the basket 10, and this requirement places constraints on the relative sizes of the weights, their effective radii of rotation, and hence the position of the Centre of Action, which can be expressed by the formula

$$\frac{m_1 \; r_1}{m_2 \; r_2} = \frac{b}{a}$$

where

$m_1 \; r_1$    is the product of the mass and effective radius of rotation of the clump weights of one drive

$m_2 \; r_2$    is the corresponding product for the other drive

$a$    is the distance of the Centre of Action from the axis of the weights of said drive; and

$b$    is the distance of the Centre of Action from the axis of the weights of the other drive.

The optimum values for the above parameters are believed to be as follows:
$m_1$ = 33.5 Kg; $m_2$ = 25.4 Kg; $r_1$ = 0.046m; $r_2$ = 0.042m and the masses are stated at a speed in the range 1500-2000 rpm. The resultant elliptical path of the basket 10 has a major radius of 3.3 mm and a minor radius of 0.6 mm.

Of course, in use, the Centre of Gravity of the basket will be affected by the mass of fluid and cuttings on the screens. Reference numeral 110 denotes the position of the mean operational Centre of Gravity of the basket.

In Figure 7, reference numerals 112 and 114 denote the positions of the Centre of Gravity when the basket is loaded, to half its maximum capacity, respectively with examples of high and low Specific Gravity fluids, whilst the positions of the Centre of Gravity when the basket is fully loaded with high and low density fluids are respectively indicated by numerals 116 and 118 in Figure 8.

It will be seen that all of the positions 110, 112, 114, 116 and 118 lie on or near the line 108, as a result of the inclination of the lower screen. Thus, the varying of the loads on the basket has a minimal effect on the angular relationship between the Centre of Gravity and the Centre of Action.

**Claims**

1. A vibratory screening machine having a rigid housing within which is resiliently mounted a rigid screening basket having upper and lower screens mounted therein the upper screen being of a coarser mesh than the lower, and drive means for vibrating the basket relative to the housing which comprises a pair of counter-rotating masses mounted for rotation about two spaced apart parallel axes between the sides of the basket, **characterised in that**:

   (1) The spacing between the two spaced apart parallel axes and/or their precise positioning relative to the mean operational centre of gravity of the basket is/are selected so that the resultant force is of the desired type, and makes a desired angle relative to the screens;

   (2) The axes of the counter-rotating masses both occupy a plane which is substantially parallel to the plane of the upper screen and spaced just thereabove, to keep the centre of gravity low;

(3) The lower screen forms a continuous ramp which is uniformly sloped upwardly from input end to discharge end and makes an acute angle with the upper screen; and

(4) The rotational moment produced by one of the counter-rotating weights is different from that produced by the other, thereby to produce an elliptical motion of the basket relative to the housing.

2. A vibratory screening machine as claimed in claim 1, wherein each mass comprises a pair of similar weights which are mounted on opposite sides of the drive unit therefor, and the drive and weights are located on a bridge which spans the basket.

3. A vibratory screening machine as claimed in claim 2, wherein the bridge is located beyond the midway point measured along the length of the basket nearer to the discharge end than the input end thereof.

4. A vibratory screening machine as claimed in any of claims 1 to 3, **characterised in that** the position of the assembly of weights in the drives relative to the basket is such that the angle of the major axis of the elliptical motion produced by the counter-rotating masses tends to pass through the centre of gravity of the basket and to subtend an acute angle in an upward sense relative to the lower inclined screen.

5. A vibratory screening machine as claimed in any of claims 1 to 4, wherein in use the upper screen of coarser mesh is substantially horizontal.

6. A vibratory screening machine as claimed in any of claims 1 to 5, wherein the acute angle between the plane of the lower screen and that of the upper screen lies between 2° and 30°.

7. A vibratory screening machine as claimed in any of the preceding claims, wherein the lower screen is adapted to be self-cleaning so as to reduce the risk of fines becoming permanently lodged between the interstices of the smaller mesh of the lower screen.

8. A vibratory screening machine as claimed in claim 7, wherein the lower screen comprises two screen cloths, one laid above the other over a rigid frame, which are pre-tensioned during manufacture so that the tension in the lower cloth is greater than the tension in the upper cloth.

9. A vibratory screening machine as claimed in claim 8, wherein the cloths are formed from woven wire having different mesh sizes and the woven wire cloths are adhesively bonded at least around their periphery to rigid frames by which the screen is mounted within the shaker basket.

10. A vibratory screening machine as claimed in any of the preceding claims, wherein both the upper and lower screens are removable from the basket.

11. A vibratory screening machine as chaimed in any of the preceding claims, wherein the screens are removable from the end of the basket over which the solids and fines are discharged in use.

12. A vibratory screening machine as claimed in any of the preceding claims, wherein the basket is mounted on four helical springs which support the weight of the basket and are adapted to vibrate substantially freely with small amplitudes up to a few millimeters relative to the rigid housing.

13. A vibratory screening machine as claimed in any of claims 1 to 12, wherein opposite sides of the rigid housing are parallel and upright when the machine is mounted for use and nothing protrudes laterally of the rigid housing.

14. A vibratory screening machine as claimed in any of the preceding claims, wherein each said drive means comprises a motor mounted centrally of a bridge with an output shaft extending axially in both directions therefrom and weights are mounted eccentrically on the two output shafts on opposite sides of each motor.

15. A vibratory screening machine as claimed in claim 14, wherein bearings are provided to support the output shafts between the motors and the eccentrically rotating masses, and further bearings are provided, outboard of the eccentrically mounted masses.

16. A vibratory screening machine as claimed in any the preceding claims, wherein flexible couplings are provided between the drives and the counter-rotating eccentric masses so that forces generated by the rotating eccentrically mounted masses are not transmitted to the motor bearings.

17. A vibratory screening machine comprising a basket having an inclined screen, drive means for vibrating the basket to cause solid material deposited on the screen to migrate therealong up the incline to the upper discharge end of the screen from which the solid material is discharged, wherein the drive means exerts on the basket a resultant force along a line which passes through or near the centre of gravity of the basket when the latter is unloaded, and wherein the inclination of the screen is such that the centre of gravity of the basket continues to lie on or near the said line for different loadings of the basket.

18. A vibratory screening machine as claimed in claim 17, wherein the drive means comprises two pairs of weights and two drives therefor, each drive being located centrally between its associated pair of masses, each pair of masses being mounted for eccentric rotation about its associated drive axis, the masses being counter-rotated by their respective drives, and wherein the said line along which the resultant force acts joins the centre of gravity of the basket under normal loading conditions to the centre of action of the two pairs of masses.

**Patentansprüche**

1. Vibrationssiebmaschine mit einem starren Gehäuse, in dem ein starrer Siebkorb mit einem darin angebrachten oberen und unteren Sieb elastisch angebracht ist, wobei der obere Siebkorb grobmaschiger ist als der untere, und einem Antriebsmittel zur Vibration des Korbs bezüglich des Gehäuses, das ein Paar gegenläufig drehende Massen umfaßt, die zur Drehung um zwei voneinander beabstandete parallele Achsen zwischen den Seiten des Korbs angebracht sind, **dadurch gekennzeichnet, daß**

   (1) der Abstand zwischen den beiden voneinander beabstandeten parallelen Achsen und/oder ihre genaue Positionierung bezüglich des mittleren Betriebsschwerpunkts des Korbs so gewählt ist/sind, daß sich eine gewünschte resultierende Kraft, die einen gewünschten Winkel zu den Sieben bildet, ergibt;

   (2) die Achsen der gegenläufig drehenden Massen beide eine Ebene einnehmen, die im wesentlichen parallel zu und in einem Abstand knapp über der Ebene des oberen Siebs verläuft, um den Schwerpunkt niedrig zu halten;

   (3) das untere Sieb eine durchgehende Rampe bildet, die vom Eingangsende zum Auslaßende eine gleichmäßige Neigung aufweist und mit dem oberen Sieb einen spitzen Winkel bildet; und

   (4) sich das durch eines der gegenläufig drehenden Gewichte erzeugte Drehmoment von dem durch das andere erzeugten unterscheidet, so daß eine elliptische Bewegung des Korbs bezüglich des Gehäuses erzeugt wird.

2. Vibrationssiebmaschine nach Anspruch 1, bei der jede Masse ein Paar ähnliche Gewichte umfaßt, die auf einander gegenüberliegenden Seiten der Antriebseinheit dafür angebracht sind, und der Antrieb und die Gewichte auf einer den Korb überspannenden Brücke angeordnet sind.

3. Vibrationssiebmaschine nach Anspruch 2, bei der die Brücke hinter dem entlang der Länge des Korbs gemessenen Mittelpunkt näher am Auslaßende als am Eingangsende davon angeordnet ist.

4. Vibrationssiebmaschine nach einem der Ansprüche 1 bis 3, **dadurch gekennzeichnet, daß** die Position der Gewichtsanordnung in den Antrieben bezüglich des Korbs derart ist, daß der Winkel der Hauptachse der durch die gegenläufig drehenden Massen erzeugten elliptischen Bewegung dazu neigt, durch den Schwerpunkt des Korbs zu verlaufen und in Aufwärtsrichtung bezüglich des unteren geneigten Siebs einen spitzen Winkel einzuschließen.

5. Vibrationssiebmaschine nach einem der Ansprüche 1 bis 4, bei der sich im Betrieb das obere grobmaschigere Sieb im wesentlichen horizontal erstreckt.

6. Vibrationssiebmaschine nach einem der Ansprüche 1 bis 5, bei der der spitze Winkel zwischen der Ebene des unteren Siebs und der des oberen Siebs zwischen 2° und 30° beträgt.

7. Vibrationssiebmaschine nach einem der vorhergehenden Ansprüche, bei der das untere Sieb selbstreinigend ausgeführt ist, um die Gefahr zu verringern, daß Feinstoffe zwischen den Lücken der kleineren Maschen des unteren Siebs dauerhaft steckenbleiben.

8. Vibrationssiebmaschine nach Anspruch 7, bei der das untere Sieb zwei Siebgewebe umfaßt, die über einen starren Rahmen übereinandergelegt sind und bei der Herstellung so vorgespannt werden, daß die Spannung im unteren Gewebe größer ist als die Spannung im oberen Gewebe.

9. Vibrationssiebmaschine nach Anspruch 8, bei der die Gewebe aus Drahtgeflecht mit unterschiedlichen Maschengrößen gebildet sind und die Drahtgeflechtgewebe zumindest um ihren Umfang mit starren Rahmen verklebt sind, mittels derer das Sieb im Schüttelkorb angebracht ist.

10. Vibrationssiebmaschine nach einem der vorhergehenden Ansprüche, bei der sowohl das obere als auch das untere Sieb aus dem Korb entfernt werden können.

11. Vibrationssiebmaschine nach einem der vorhergehenden Ansprüche, bei der die Siebe aus dem Ende des Korbs entfernt werden können, über das im Betrieb die Fest- und Feinstoffe abgeführt werden.

**12.** Vibrationssiebmaschine nach einem der vorhergehenden Ansprüche, bei der der Korb auf vier Schraubenfedern angebracht ist, die das Gewicht des Korbs stützen und so ausgeführt sind, daß sie mit kleinen Amplituden bis zu ein paar Millimetern bezüglich des starren Gehäuses im wesentlichen frei vibrieren.

**13.** Vibrationssiebmaschine nach einem der Ansprüche 1 bis 12, bei der sich einander gegenüberliegende Seiten des starren Gehäuses parallel und aufrecht erstrecken, wenn die Maschine zum Betrieb montiert ist, und keine Elemente seitlich aus dem starren Gehäuse ragen.

**14.** Vibrationssiebmaschine nach einem der vorhergehenden Ansprüche, bei der jedes Antriebsmittel einen mittig einer Brücke angebrachten Motor mit einer sich axial in beiden Richtungen davon erstrecken Abtriebswelle umfaßt und Gewichte exzentrisch an den beiden Abtriebswellen auf einander gegenüberliegenden Seiten jedes Motors angebracht sind.

**15.** Vibrationssiebmaschine nach Anspruch 14, bei der Lager zur Abstützung der Abtriebswellen zwischen den Motoren und den exzentrisch drehenden Massen und weitere Lager außerhalb der exzentrisch angebrachten Massen vorgesehen sind.

**16.** Vibrationssiebmaschine nach einem der vorhergehenden Ansprüche, bei der zwischen den Antrieben und den gegenläufig drehenden exzentrischen Massen flexible Kupplungen vorgesehen sind, so daß durch die drehenden exzentrisch angebrachten Massen erzeugte Kräfte nicht auf die Motorlager übertragen werden.

**17.** Vibrationssiebmaschine mit einem Korb mit einem geneigten Sieb, einem Antriebsmittel zum Vibrieren des Korbs, um zu bewirken, daß auf dem Sieb abgelagerte Feststoffe daran entlang an der Neigung nach oben zum oberen Auslaßende des Siebs wandern, vor wo aus die Feststoffe abgeführt werden, wobei das Antriebsmittel auf den Korb eine resultierende Kraft entlang einer Linie, die durch den Schwerpunkt oder in der Nähe davon verläuft, wenn der Korb ungeladen ist, ausübt und wobei das Sieb derart geneigt ist, daß der Schwerpunkt des Korbs bei verschiedenen Ladungen des Korbs weiterhin auf oder in der Nähe der Linie liegt.

**18.** Vibrationssiebmaschine nach Anspruch 17, bei der das Antriebsmittel zwei Gewichtspaare und zwei Antriebe dafür umfaßt, wobei jeder Antrieb mittig zwischen seinem zugehörigen Massenpaar angeordnet und jedes Massenpaar zur exzentrischen Drehung um seine zugehörige Antriebsachse angebracht ist, wobei die Massen durch ihren jeweiligen Antrieb gegenläufig gedreht werden und wobei die Linie, entlang der die resultierende Kraft wirkt, den Schwerpunkt des Korbs unter normalen Ladungsbedingungen mit der Wirkungsmitte der beiden Massenpaare verbindet.

## Revendications

**1.** Machine de criblage vibrante dotée d'un carter rigide à l'intérieur duquel est monté de manière élastique un panier de criblage rigide dans lequel sont montés des cribles supérieur et inférieur, le crible supérieur présentant des mailles plus grossières que le crible inférieur, et de moyens d'entraînement pour faire vibrer le panier par rapport au carter comprenant une paire de masses contra-rotatives montées rotatives autour de deux axes parallèles espacés entre les côtés du panier, **caractérisée en ce que** :

(1) l'espace entre les deux axes parallèles espacés et/ou leur positionnement précis par rapport au centre de gravité opérationnel moyen du panier est/sont sélectionné(s) de telle sorte que la force résultante soit du type souhaité et forme un angle souhaité par rapport aux cribles ;
(2) les axes des masses contra-rotatives occupent tous deux un plan essentiellement parallèle au plan du crible supérieur et espacé juste au-dessus d'eux, pour maintenir le centre de gravité bas ;
(3) le crible inférieur forme une rampe continue inclinée uniformément vers le haut depuis l'extrémité d'entrée jusqu'à l'extrémité d'évacuation et forme un angle aigu avec le crible supérieur; et
(4) le moment de rotation produit par l'un des poids contra-rotatifs est différent de celui produit par l'autre, afin de produire ainsi un mouvement elliptique du panier par rapport au carter.

**2.** Machine de criblage vibrante selon la revendication 1, dans laquelle chaque masse comprend une paire de poids similaires montés sur des côtés opposés de l'unité d'entraînement prévue pour celle-ci, et l'entraînement et les poids sont situés sur un pont traversant le panier.

**3.** Machine de criblage vibrante selon la revendication 2, dans laquelle le pont est situé au-delà du point milieu mesuré sur la longueur du panier, plus près de son extrémité d'évacuation que de son extrémité d'entrée.

4. Machine de criblage vibrante selon l'une quelconque des revendications 1 à 3, **caractérisée en ce que** la position de l'ensemble de poids dans les entraînements par rapport au panier est telle que l'angle du grand axe du mouvement elliptique produit par les masses contra-rotatives tend à passer par le centre de gravité du panier et à sous-tendre un angle aigu dans un sens ascendant par rapport au crible inférieur incliné.

5. Machine de criblage vibrante selon l'une quelconque des revendications 1 à 4, dans laquelle, en service, le crible supérieur de maille plus grossière est essentiellement horizontal.

6. Machine de criblage vibrante selon l'une quelconque des revendications 1 à 5, dans laquelle l'angle aigu entre le plan du crible inférieur et celui du crible supérieur est compris entre 2° et 30°.

7. Machine de criblage vibrante selon l'une quelconque des revendications précédentes, dans laquelle le crible inférieur est adapté pour être autonettoyant de manière à réduire le risque de coinçage permanent de fines entre les interstices de la maille plus petite du crible inférieur.

8. Machine de criblage vibrante selon la revendication 7, dans laquelle le crible inférieur comprend deux toiles de criblage, l'une superposée à l'autre par-dessus un cadre rigide, préalablement tendues durant la fabrication de façon à ce que la tension dans la toile inférieure soit supérieure à la tension dans la toile supérieure.

9. Machine de criblage vibrante selon la revendication 8, dans laquelle les toiles sont formées de fil tissé présentant différentes tailles de maille, et les toiles en fil tissé sont liées de manière adhésive, au moins sur leur périphérie, à des cadres rigides grâce auxquels le crible est monté à l'intérieur du panier à secousses.

10. Machine de criblage vibrante selon l'une quelconque des revendications précédentes, dans laquelle les cribles supérieur et inférieur peuvent tous deux être retirés du panier.

11. Machine de criblage vibrante selon l'une quelconque des revendications précédentes, dans laquelle les cribles peuvent être retirés par l'extrémité du panier par laquelle les solides et les fines sont évacués en service.

12. Machine de criblage vibrante selon l'une quelconque des revendications précédentes, dans laquelle le panier est monté sur quatre ressorts hélicoïdaux supportant le poids du panier et adaptés pour vibrer essentiellement librement avec de faibles amplitudes allant jusqu'à quelques millimètres par rapport au carter rigide.

13. Machine de criblage vibrante selon l'une quelconque des revendications 1 à 12, dans laquelle des côtés opposés du carter rigide sont parallèles et à la verticale lorsque la machine est montée pour être utilisée et rien ne dépasse latéralement du carter rigide.

14. Machine de criblage vibrante selon l'une quelconque des revendications précédentes, dans laquelle chacun desdits moyens d'entraînement comprend un moteur monté au centre d'un pont, un arbre de sortie se prolongeant axialement dans les deux direction depuis celui-ci, et des poids sont montés de façon excentrique sur les deux arbres de sortie sur des côtés opposés de chaque moteur.

15. Machine de criblage vibrante selon la revendication 14, dans laquelle des paliers sont prévus pour supporter les arbres de sortie entre les moteurs et les masses à rotation excentrique, et d'autres paliers sont prévus vers l'extérieur des masses montées de façon excentrique.

16. Machine de criblage vibrante selon l'une quelconque des revendications précédentes, dans laquelle des accouplements souples sont prévus entre les entraînements et les masses excentriques contra-rotatives de sorte que les forces générées par les masses rotatives montées de façon excentrique ne soient pas transmises aux paliers des moteurs.

17. Machine de criblage vibrante comprenant un panier doté d'un crible incliné, des moyens d'entraînement pour faire vibrer le panier afin de provoquer la migration de matières solides déposées sur le crible le long de celui-ci, vers le haut de l'inclinaison et jusqu'à l'extrémité d'évacuation supérieure du crible de laquelle les matières solides sont évacuées, dans lequel les moyens d'entraînement exercent sur le panier une force résultante le long d'une droite passant par le centre de gravité du panier, ou à proximité de celui-ci, lorsque ce dernier est déchargé, et dans lequel l'inclinaison du crible est telle que le centre de gravité du panier continue de se trouver sur ladite droite, ou à proximité de celle-ci, pour différentes charges du panier.

18. Machine de criblage vibrante selon la revendication 17, dans laquelle les moyens d'entraînement comprennent deux paires de poids et deux entraînements, chaque entraînement étant situé au centre entre ses paires de masses associées, chaque paire de masses étant montée à rotation excentrique autour de son axe d'entraînement associé, les masses étant entraînées en contra-rotation par leurs moyens d'entraînement respectifs, et dans laquelle ladite droite le long de laquelle la force résultante agit joint le centre de gravité du panier, dans des conditions de charge normales, au centre d'action des deux paires de masses.

ELEVATION
Fig. 1

UPPER SCREEN

SECTIONAL VIEW

LOWER SCREEN

Fig. 2

PLAN VIEW

Fig. 3

END ELEVATION

Fig. 4

CLUMPWEIGHT
2 PLACES PER
DRIVE ASSEMBLY

CYLINDRICAL ROLLER BEARING
4 PLACES PER DRIVE ASSEMBLY

ELECTRIC MOTOR
THROUGH SHAFT DESIGN

FLEXIBLE DRIVE COUPLING
2 PLACES PER DRIVE ASSEMBLY

SECTIONAL ELEVATION
THROUGH VIBRATORY
DRIVE ASSEMBLY

Fig. 5

DRY C.O.G.
MEAN OPERATIONAL C.O.G.

MEAN OPERATIONAL

Fig. 6

LOW S.G.
HIGH S.G.

50% CAPACITY
Fig. 7

LOW S.G.
HIGH S.G.

100% CAPACITY    Fig. 8